Europäisches Patentamt

European Patent Office

Office européen des brevets

(11) Publication number: **0 224 627**
**A1**

## (12) EUROPEAN PATENT APPLICATION

(21) Application number: 85730163.4

(22) Date of filing: 06.12.85

(51) Int. Cl.4: **B01D 53/34** , C01F 11/46

(43) Date of publication of application:
**10.06.87 Bulletin 87/24**

(84) Designated Contracting States:
**DE FR GB IT**

(71) Applicant: **MITSUBISHI JUKOGYO KABUSHIKI KAISHA**
**5-1, Marunouchi 2-chome Chiyoda-ku**
**Tokyo 100(JP)**

(72) Inventor: **Ukawa, Naohiko Hiroshima**
**Technical Institute**
**MITSUBISHI JUKOGYO KK 6-22,**
**Kanonshin-machi 4-cho**
**Nishi-ku Hiroshima Hiroshima Pref.(JP)**
Inventor: **Tatani, Atsushi Hiroshima Technical**
**Institute**
**MITSUBISHI JUKOGYO KK 6-22,**
**Kanonshin-machi 4-cho**
**Nishi-ku Hiroshima Hiroshima Pref.(JP)**
Inventor: **Onizuka, Masakazu Hiroshima**
**Technical Institute**
**MITSUBISHI JUKOGYO KK 6-22,**
**Kanonshin-machi 4-cho**
**Nishi-ku Hiroshima Hiroshima Pref.(JP)**
Inventor: **Inoue, Kenji Hiroshima Technical**
**Institute**
**MITSUBISHI JUKOGYO KK 6-22,**
**Kanonshin-machi 4-cho**
**Nishi-ku Hiroshima Hiroshima Pref.(JP)**
Inventor: **Shimizu, Taku**
**MITSUBISHI JUKOGYO K.K. 5-1, Marunouchi**
**2-chome**
**Chiyoda-ku Tokyo(JP)**

(74) Representative: **Meissner, Peter E., Dipl.-Ing.**
**et al**
**Meissner & Meissner Patentanwälte**
**Herbertstrasse 22**
**D-1000 Berlin 33 Grunewald(DE)**

(54) **Method for desulfurizing exhaust gas.**

(57) The present invention is directed to a method for desulfurizing an exhaust gas by bringing the exhaust gas containing $SO_2$ into contact with a recycling slurry containing a calcium compound in an absorbing tower; the method being characterized by comprising the steps of blowing a gas containing oxygen into the slurry; and successively detecting an oxidation-reduction potential of the slurry; whereby a flow rate of the gas containing oxygen is regulated so as to completely oxidize calcium sulfite in the slurry.

# F I G. I

## Method for Desulfurizing Exhaust Gas

FIELD OF THE INVENTION AND RELATED ART STATEMENT

The present invention relates to a method for desulfurizing an exhaust gas, and more specifically to an improvement in a method for desulfurizing an exhaust gas on the basis of a so-called wet lime/gypsum process in which $SO_2$ present in a combustion exhaust gas is removed therefrom by the use of a calcium compound such as limestone, slaked lime or dolomite as an absorbent material.

In an apparatus for desulfurizing an exhaust gas in which a wet lime/gypsum process is utilized, an exhaust gas containing $SO_2$ is brought into contact with a slurry containing a calcium compound having a small solubility such as $Ca(OH)_2$, $CaCO_3$, $CaSO_3 \bullet \frac{1}{2}H_2O$ and $CaSO_4 \bullet 2H_2O$ in order to absorb $SO_2$ from the exhaust gas. A reaction of absorbing $SO_2$ can summarily be represented as follows:

$$SO_2 + Ca(OH)_2 \rightarrow CaSO_3 \bullet \tfrac{1}{2}H_2O + \tfrac{1}{2}H_2O \ ... \ (1)$$
$$SO_2 + CaCO_3 + \tfrac{1}{2}H_2O \rightarrow CaSO_3 \bullet \tfrac{1}{2}H_2O + CO_2 \ ... \ (2)$$

The following reaction also occurs partially owing to oxygen present in the exhaust gas:

$$CaSO_3 \bullet \tfrac{1}{2}H_2O + \tfrac{1}{2}O_2 + 5/2H_2O \rightarrow CaSO_4 \bullet 2H_2O \ ... \ (3)$$

Such summary reaction formulae are simple, but an actual reaction mechanism is not so simple but is extremely complicated with various dissolved ions, for example, $Ca^{2+}$, $Mg^{2+}$, $SO_4^{2-}$, $Na^+$, $SO_3^{2-}$, $HSO_3^-$, $CO_3^{2-}$, $HCO_3^-$, $H_2SO_3$, $H_2CO_3$, $Cl^-$, $F^-$, $Al^{3+}$, $Mn^{2+}$, $S_2O_6^{2-}$, $H^+$, $OH^-$ and the like. Therefore, not a few pars of the reactions are still unknown and unclear.

With regard to methods each of which comprises first reacting $SO_2$ with an absorbent such as calcium oxide, calcium hydroxide or calcium carbonate, oxidizing the resultant compound of sulfurous acid and recovering a product gypsum, they can be roughly classified into two categories which are known.

One method of them comprises carrying out the above-mentioned reactions (1) and (2) in an absorbing device and then subjecting the resultant calcium sulfite to the above-mentioned oxidation reaction (3) in an oxidizing device which is disposed independently of the absorbing device. The other method of them comprises providing, in the absorbing device, a mechanism for blowing fine air bubbles into a liquid tank from which an absorbing liquid is circulated, in order to oxidize calcium sulfite present in the absorbing liquid.

In both the methods described above, air is generally utilized as an oxidizing agent and an aeration tank is used as the oxidizing device, and for the purposes of improving an oxidation rate and correspondingly reducing an aeration rate, a variety of modifications have been made so far.

When the oxidizing device is arranged independently, an operating pressure is generally regulated to a level of 1 to 5 $kg/cm^2$ so as to heighten the utilization of oxygen. In the case that the oxidization is carried out in the absorbing device itself, it is economically disadvantageous to dispose the liquid tank which is operable under pressure, because the exhaust gas to be treated has ordinary pressure. Therefore, there has been employed a method of adding a liquid phase catalyst of manganese or the like which can accelerate the oxidation reaction.

A drawback which is common to both the methods is that there is no manner of successively and simply measuring a conversion of calcium sulfite into calcium sulfate, and thus if it is intended to maintain the conversion into calcium sulfate at an elevated level, an air flow rate must always be kept up excessive to cope with load fluctuation and the like. That is to say, the recycling liquid is sampled on occasion, and a concentration of calcium sulfite is then measured by an iodine oxidation-reduction titration. In accordance with the measured results, an air flow rate is afterward adjusted intermittently so as to lower the concentration of calcium sulfite to a predetermined level or less. If the concentration of calcium sulfite increases, the gypsum which is the final product will be poor in quality. Particularly in the case of the system in which the oxidization is carried out in the above-mentioned absorbing device, it is known that an $SO_2$ absorbing performance deteriorates and a reactivity with the calcium compound which is the absorbent declines inconveniently. In consequence, it is necessary to excessively feed air to be aerated, as mentioned above. The excessive feed of the air for the aeration increases running costs, which fact is the main drawback of the conventional oxidation method of utilizing the aeration.

OBJECT AND SUMMARY OF THE INVENTION

An object of the present invention is to provide a method by which drawbacks of a conventional method are eliminated and in which an oxidation reaction is carried out in a tank for a circulating and absorbing liquid.

In the course of detailed experimental researches on the influence of various components on the performance of a desulfurization, the inventors of the present application have found that there exists a certain relation between an oxidation-reduction potential (hereinafter referred to as ORP) of a slurry being circulated through an absorbing tower and a concentration of calcium sulfite present in the slurry.

The present invention has been achieved on the basis of this finding and is directed to a method for desulfurizing an exhaust gas by bringing the exhaust gas containing $SO_2$ into contact with a recycling slurry containing a calcium compound in an absorbing tower; the method being characterized by comprising the steps of blowing a gas containing oxygen into the slurry; and successively detecting an oxidation-reduction potential of the slurry; whereby a flow rate of the gas containing oxygen is regulated so as to completely oxidize calcium sulfite in the slurry.

The above-mentioned object and other objects, characteristics and benefits of the present invention will be more apparent through the following detailed description and accompanying drawings.

BRIEF DESCRIPTION OF THE DRAWINGS

Fig. 1 is a correlative diagram showing a relation between a concentration of sulfurous acid in a recycling liquid and ORP, which relation is a foundation of the present invention;

Fig. 2 is a similar correlative diagram showing a relation between a concentration of sulfurous acid in the recycling liquid and a flow rate of air being fed into a liquid tank; and

Fig. 3 is a flow sheet illustrating one embodiment of the present invention.

DETAILED DESCRIPTION OF PREFERRED EMBODIMENT

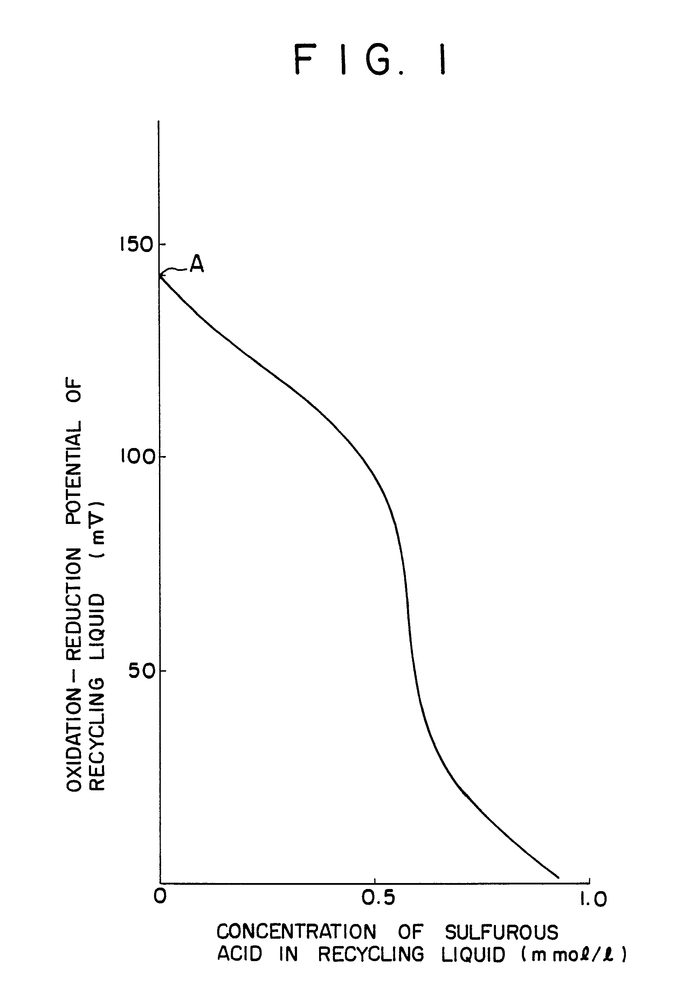

Fig. 1 shows one example of a relation between ORP of a recycling liquid and a concentration of sulfurous acid in the case that a desulfurization has been carried out by bringing an exhaust gas containing 1,300 ppm of $SO_2$ into contact with a slurry containing a calcium compound.

ORP is loyally concerned with the concentration of sulfurous acid in the liquid, and even if an extremely small amount of sulfurous acid is present there, ORP will indicate a low value; if the concentration thereof decreases, ORP will denote a high value rapidly.

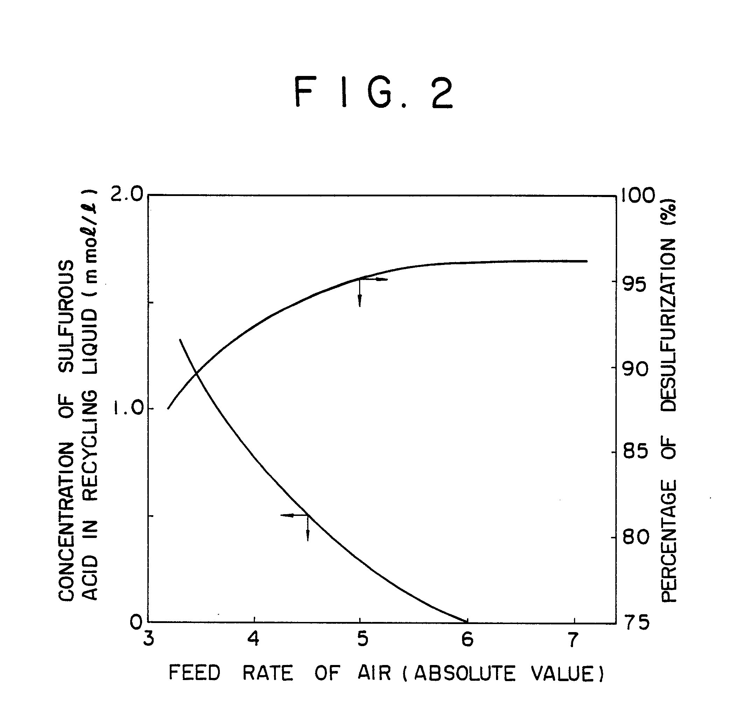

Further, with regard to a relation between the concentration of sulfurous acid in the recycling liquid and a flow rate of air which is fed into a liquid tank disposed in the lower portion of an absorbing tower, such correlative experimental results as shown in Fig. 2 have been obtained. That is to say, the following has been found therefrom: As the air flow rate is increased, an oxidation rate will be accelerated and the concentration of sulfurous acid will thus be lowered, and when the air flow rate has passed through a point B on a curve in Fig. 2, sulfurous acid will be vanished. Further, as be definte from another curve depicted together in Fig. 2, the percentage of a desulfurization is heightened noticeably up to the point B.

The present inventors have paid much attention to the facts of Figs. 1 and 2, and consequently, the present invention has been suggested here. Heretofore, the relations in Fig. 2 have been obtained by sampling the recycling liquid intermittently during operation and analyzing it by hand in accordance with an iodine oxidation-reduction method, and thus the frequency of the analysis is naturally limited. The amount of the exhaust gas, the concentration of $SO_2$ and the like vary noticeably with load conditions of a boiler or the like which is a source of the exhaust gas, and their variation generally occurs rapidly. In view of the above-mentioned situations of the analysis as well as the load fluctuation and the like, the feed of air for the oxidation must be regulated to an excessive side from the point B in Fig. 2 in order to keep up the performance of the desulfurization. This is disadvantageous from the viewpoint of running costs.

According to the present invention, if a correlation between ORP and the concentration of sulfurous acid as shown in Fig. 1 is once established and a calibration curve is prepared therefrom, an air flow rate can be successively regulated so that the concentration of sulfurous acid in the recycling liquid may disappear, in other words, so that ORP may reach a level of A mV in Fig. 1. That is to say, when ORP is less than A mV, the air flow rate will be increased in compliance with its deviation, and when ORP is more than A mV, the air rate will be decreased in proportion to its deviation. In short, a so-called proportional control can be applied.

As exhibited in Figs. 1 and 2, in the region where the concentration of sulfurous acid is low, the performance of the desulfurization is remarkably affected by the concentration of sulfurous acid, and in this region, the change in ORP is also remarkable. Therefore, even a slight change in the concentration of sulfurous acid can be detected by ORP, and thus the air flow rate can be regulated to a minimum level necessary for sulfurous acid to disappear by the above-mentioned proportional control, whereby the desired performance of the desulfurization can be retained.

ORP can be measured very easily only by dipping a pair of electrodes into the recycling liquid, and a delay of measurement times does not occur. Accordingly, it is unnecessary to feed excessive air to make compensation for the delay of the measurements, and a follow-up action to the load fluctuation is also good. The feed of air in the necessary but minimum amount is advantageous for the reduction in the running costs.

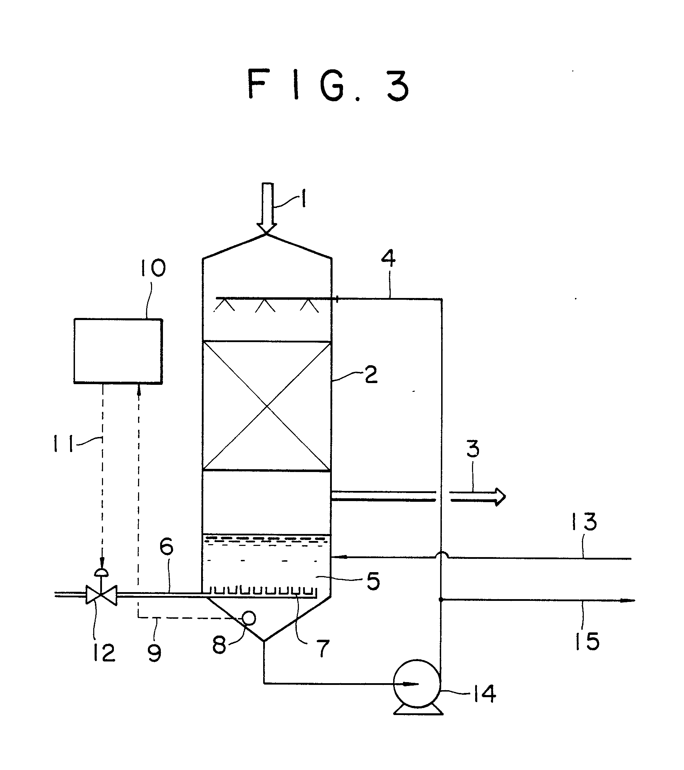

Now, the present invention will be further described in detail in reference to an embodiment in Fig. 3.

In Fig. 3, an exhaust gas containing $SO_2$ is introduced into an absorbing tower 2 through a duct 1, and the purified gas is discharged into the atmosphere through a duct 3.

In the absorbing tower 2, the exhaust gas is brought into contact with an absorbing liquid sprayed into the absorbing tower 2 through a line 4, so that $SO_2$ is absorbed by the absorbing liquid and results in calcium sulfite ($CaSO_3$). The absorbing liquid containing $CaSO_3$ falls into a recycling liquid tank 5 in the lower portion of the absorbing tower 2, and is further brought into contact with air blown in the form of fine bubbles into the tank 5 through a line 6 and dispersing nozzles 7, so that gypsum ($CaSO_4$) is produced. Needless to say, a part of $CaSO_3$ is oxidized also in the absorbing tower 2 by oxygen present in the exhaust gas, but the concentration of the oxygen therein is generally low. Accordingly, in order to complete the oxidation, it is often necessary to blow air into the liquid tank 5. ORP of the recycling liquid is detected by a pair of electrodes 8 disposed in the liquid tank 5. The position where the electrodes 8 are disposed is not limited to the inside of the liquid tank 5, and they may be naturally disposed in the line 4. As the electrodes 8, platinum electrodes which are usually used are applicable. ORP which has been detected by the electrodes 8 is delivered to a regulator 10 through a line 9, and in compliance with a deviation of the detected ORP value from a predetermined ORP voltage, an opening/closing signal is sent to a control valve 12 through a line 11. By means of this control valve 12, a necessary minimum flow rate of air to be fed to the liquid tank 5 can be regulated.

The absorbing liquid in which $CaSO_3$ has been caused to disappear by the oxidation is forwarded through the line 4 by a recycling pump 14 and is then sprayed into the absorbing tower 2 again. A pH of the absorbing liquid is regulated with a calcium carbonate slurry fed through a line 13, and a part of the recycling liquid is drawn through a line 15 and gypsum is then separated therefrom.

The ORP voltage which is previously input in the regulator 10 may be decided from a calibration curve prepared by seeking the correlation between the concentration of sulfurous acid and ORP. In this time, since ORP is affected more or less by dissolved components other than sulfurous acid, it is necessary to prepare the exclusive calibration curve inherent to an employed desulfurizing apparatus.

The present invention will be described in accordance with an embodiment in order to elucidate its functional effects.

EXAMPLE

In an embodiment shown in Fig. 3, an exhaust gas from a boiler was successively treated for 24 hours, and a part of the treated exhaust gas was drawn at a rate of about 8,000 $m^3N/h$. In this case, a fluctuation width was ±20 $m^3N/h$ inclusive of that at load follow-up, and average values of a flow rate of air fed through a line 6 were as follows:

| Load of Boiler | Average Air Flow Rate |
|---|---|
| 100% | 420 $m^3N/h$ |
| 50% | 350 $m^3N/h$ |

The average air flow rate for 24 hours was 379 m³N/h. The concentration of $SO_2$ at an inlet was about 2,000 ppm and was constant, and a desulfurization rate of 96% or more could be maintained. The total amount of a calcium carbonate absorbent fed during the operation was comparable to 1.04 molar ratio of the total amount of $SO_2$ absorbed from the exhaust gas.

For confirmation, the recycling liquid was sampled at an interval of one hour and the concentration of sulfurous acid was then measured. It was found that the concentration of the acid was 0.5 mmol/ℓ or less.

COMPARATIVE EXAMPLE

In the embodiment shown in Fig. 3, the exhaust gas was treated under the same conditions as in the above example with the exception that the air control system for ORP, i.e., the electrodes 8, the regulator 10, the lines 9 and 11 were eliminated and the control valve 12 was adjusted by hand. In this case, an average air flow rate for 24 hours was 415 m³N/h and a fluctuation width was ±60 m³N/h. The concentration of $SO_2$ at an inlet was constant and about 2,000 ppm, the value of which was the same as in the above example. Further, a desulfurization rate was 94% or more.

The total amount of calcium carbonate fed during the operation was comparable to 1.08 molar ratio of the total amount of $SO_2$ absorbed from the exhaust gas.

The air flow rate was regulated by sampling the recycling liquid at an interval of one hour, but the maximum concentration of sulfurous acid was 3.5 mmol/ℓ.

From the above-mentioned example and comparative example, it is definite that according to the present invention, the air flow rate can be reduced and the performance of the desulfurization can be maintained.

**Claims**

1. A method for desulfurizing an exhaust gas by bringing the exhaust gas containing $SO_2$ into contact with a recycling slurry containing a calcium compound in an absorbing tower; the method being characterized by comprising the steps of blowing a gas containing oxygen into the slurry; and successively detecting an oxidation-reduction potential of the slurry; whereby a flow rate of the gas containing oxygen is regulated so as to completely oxidize calcium sulfite in the slurry.

2. A method for desulfurizing an exhaust gas according to Claim 1 wherein a calibration curve is previously prepared on the basis of a correlation between a concentration of sulfurous acid in the slurry and an oxidation-reduction potential; the oxidation-reduction potential decided from the calibration curve is input in a regulator; and the flow rate of the gas containing oxygen is controlled in compliance with a deviation of a detected oxidation-reduction potential of the slurry from the decided potential.

3. A method for desulfurizing an exhaust gas according to Claim 1 or 2 wherein the oxidation-reduction potential of the slurry is detected in the recycling tank of the absorbing tower or in a line for allowing the absorbing liquid to be recycled therethrough.

F I G. 1

OXIDATION — REDUCTION POTENTIAL OF RECYCLING LIQUID (mV)

CONCENTRATION OF SULFUROUS ACID IN RECYCLING LIQUID (m mol/ℓ)

# F I G. 2

# F I G . 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 9, no. 175 (C-292)[1898], 19th July 1985; & JP - A - 60 48122 (MITSUBISHI JUKOGYO K.K.) 14-03-1985 | 1 | B 01 D 53/34 C 01 F 11/46 |
| | --- | | |
| A | DE-A-2 615 037 (BAYER AG) * claim 1 * | 1 | |
| | --- | | |
| A | DE-A-2 615 339 (AGFA-GEVAERT AG) * example 4 * | | |
| | ----- | | |

TECHNICAL FIELDS
SEARCHED (Int. Cl.4)

B 01 D 53/00
C 02 F 11/00
C 01 F 11/00

The present search report has been drawn up for all claims

| Place of search | Date of completion of the search | Examiner |
|---|---|---|
| BERLIN | 01-09-1986 | BERTRAM H E H |